# EUROPÄISCHE PATENTANMELDUNG

(11) **EP 0 568 752 A1**
(43) Veröffentlichungstag der Anmeldung: **10.11.1993**
(21) Anmeldenummer: 92810333.2
(22) Anmeldetag: 06.05.1992
(51) Int. Cl.: C04B 28/14, E04F 13/14

(54) **Leichtgips**

(71) Anmelder: Bula, Karl, CH-5200 Brugg (CH)
(72) Erfinder: Bula, Karl, CH-5200 Brugg (CH)
(74) Vertreter: AMMANN PATENTANWAELTE AG BERN

(57) **Zusammenfassung**

Zu Gips wird ein mineralisches, poröses Füllmaterial zugesetzt, wodurch sich ein Baumaterial mit gegenüber massivem Gips niedrigerer, einstellbarer Dichte ergibt. Daraus hergestellte Platten, Bausteine und dergleichen besitzen eine erhöhte Wärmedämmung und sind feuerresistent. Das niedrige Gewicht ist besonders beim Trockenausbau und der Verkleidung von Decken von Vorteil. Die Belastbarkeit erlaubt auch die Errichtung tragender Wände aus dem Leichtgips. Der Abnahme der Festigkeit mit steigendem Füllstoffgehalt kann durch Zusatz eines Binders entgegengewirkt werden.

## Beschreibung

Die vorliegende Erfindung bezieht sich auf Baumaterialien, insbesondere auf solche auf Gipsbasis.

Gips wird im Baugewerbe im Bereich des Innenausbaus in grossem Umfang eingesetzt. Neben dem Verputzen wird Gips heute vor allem in Form von Gipskartonplatten und Vollgipssteinen für zwischenwände im Trockenausbau verwandt, jedoch wegen des relativ hohen Gewichts nur in geringem Umfang für Deckenplatten.

Eine Bauform für Innenwände ist die sog. Richterwand, die aus einer Schichtfolge Gipsplatte/Isoliermaterial/Gipsplatte aufgebaut ist. Problematisch, besonders im Deckenbereich, ist das hohe spezifische Gewicht von massivem Gips, weshalb Deckenplatten Randverstärkungen aufweisen, die naturgemäss das Gesamtgewicht der Platten wiederum erhöhen. Ausserdem ist bei der Renovierung von älteren Bauwerken die zulässige Belastbarkeit der Decken oft so niedrig, dass die herkömmlichen Gipsplatten bereits Probleme bereiten.

Eine weitere, zunehmend wichtiger werdende Anforderung an Baumaterialien ist die Wärmeisolationsfähigkeit. Gips an sich zeigt hier nur die mässigen Isolationswerte, wie sie auch für andere Massivbaustoffe gängig sind. Richterwände haben zwar durch die eingelegte Schicht aus Isolationsmaterial eine gute Wärmeisolationswirkung. Allerdings sind gerade in jüngster Zeit einige der gebräuchlichsten Isolationsmaterialien, Stein- und Glaswolle, in den Verdacht geraten, gesundheitsschädliche Auswirkungen zu haben. Bei Konstruktionen, bei denen Luft durch die Isolationsschicht streicht, wie Decken, bei denen hinter den Deckenplatten eine Isolationsschicht angeordnet ist, besteht eine direkte Verbindung zwischen der Isolationsschicht und dem Raum, so dass die eventuell aus dem Isolationsmaterial freigesetzten Partikel in den Raum eindringen können.

Eine weiteres Kriterium für Baumaterialien ist die Feuerfestigkeit. Gips an sich ist zwar als anorganischer Stoff unbrennbar. Die üblicherweise verwendeten Platten für Richterwände oder Decken müssen jedoch verstärkt werden, um die entsprechenden Brandschutznormen zu erfüllen, wodurch sie schwer und unhandlich werden. Das zusätzliche Gewicht bedeutet auch wieder eine Einschränkung der Anwendung.

Bekannt sind Einlagen aus Schilfrohr oder pflanzlichen Fasern, um die Festigkeit zu erhöhen, und auch die Verwendung von Sägemehl als Füllstoff oder die Ausbildung von Hohlräumen zur Verringerung des Gewichts. Die Einlagerung von pflanzlichen Stoffen bringt dabei die Gefahren des Verrottens der Füllstoffe mit sich, wodurch die Festigkeit der Gipsplatten noch unter diejenige einer Platte ohne derartige Zusätze absinken kann. Zusätzliche Probleme ergeben sich im Hinblick auf die Feuerfestigkeit, da die organischen Füllstoffe durch Hitze zersetzt werden, wonach die Gipsstruktur ihre Festigkeit verliert.

Die Ausbildung von Hohlräumen ist nur in begrenztem Masse steuerbar, wodurch sich Bereiche verschiedener Stabilität innerhalb der Platten ausbilden können, z. B. durch die Ansammlung grosser Blasen oder ein Bereich mit sehr wenigen Hohlräumen. Grössere, isolierte Hohlräume können auch im Feuerfall die Platten sprengen. Auf jeden Fall wird die Festigkeit der Platten verringert, je grösser der Volumenanteil an Hohlräumen ist.

Heute übliche Verwendungsformen sind Gipsvollsteine, die sogenannten Alba-Platten, und die Gipskartonplatte, die in verschiedenen Spezialkonstruktionen wie beispielsweise Richterwänden eingesetzt werden. Gipskartonplatten werden heute mit einr Geschwindigkeit von etwa 100 m/min auf Bandanlagen hergestellt. Übliche Dicken sind 6, 8, 10, 12, 15 und 20 mm. Derart dünne Platten können im Grossformat nur mit einem beidseitig aufgebrachten Spezialkarton hergestellt werden, der die Platten durch seine Zugfestigkeit stabilisiert. Ein Kernpunkt der Herstellung ist die Haftung des Kartons auf der Gipsoberfläche. Diese muss in kurzer Zeit erzielt werden und darf später unter dem Einfluss von Feuchtigkeit nicht unter einen bestimmten Wert fallen.

Es stellt sich daher die Aufgabe, ein neues Baumaterial auf Gipsbasis mit verringertem spezifischem Gewicht hoher Festigkeit und guter Langzeitstabilität zu entwickeln.

Günstig wäre auch, wenn das neue Material eine gute Fernerbeständigkeit aufwiese und für die Konstruktion tragender Wände eingesetzt werden könnte.

Diese Aufgabe wird durch das Baumaterial gemäss Anspruch 1 gelöst. Die weiteren Ansprüche geben Ausführungen mit bevorzugten oder besonderen Eigenschaften, Herstellungsverfahren und Verwendungsarten des erfindungsgemässen Baumaterials an.

Demgemäss wird der Gips mit mindestens einem porösen, mineralischen Füllstoff versetzt, wodurch sich der erfindungsgemässe Leichtgips ergibt. Als Füllstoff dienen bevorzugt Perlit, Glimmer oder Mischungen daraus. Perlit und Glimmer werden in einer Form eingesetzt, die durch eine thermische Vorbehandlung hergestellt wird und eine geringe Dichte aufweist. Es eignen sich jedoch prinzipiell alle bekannten mineralischen Füllstoffe, bevorzugt solche mit relativ geringer Dichte, d. h. insbesondere kleinerer als Wasser. Derartige Stoffe zeichnen sich durch einen grossen Volumenanteil von Luft in den Hohlräumen oder Poren aus. Der Füllstoff wird allgemein in schüttfähiger Form, z. B. als Granulat zugesetzt, dessen Korngrösse vom Verwendungszweck abhängig gewählt wird. Für glatte Oberflächen wird der Füllstoff bevorzugt feinkörnig zugesetzt, bei massiveren Teilen können entsprechend auch grobkörnigere Sorten eingesetzt werden.

Mit zunehmendem Gehalt an Füllstoff nimmt die Festigkeit des Leichtgipses ab, da der Anteil an dem die Füllstoffpartikel verbindenden Gips abnimmt. Dieser Effekt kann durch Zugabe von Bindern zumindest zum Teil ausgeglichen werden. Der Binder erlaubt es beispielsweise, weitgehend unabhängig vom Füllstoffgehalt eine Festigkeit nahe derjenigen von massivem Gips oder auch darüber einzustellen. Allgemein können als Binder in wässriger Umgebung härtende Stoffe eingesetzt werden. Derartige Stoffe gehören im allgemeinen zu den in Wasser gelösten oder dispergierten Klebstoffen. Eine weitere Bedingung ist, dass bei einer späteren Benetzung des ausgehärteten Leichtgipses der Binder nicht wieder erweicht bzw. sich auflöst.

Mögliche Binder sind beispielsweise Cellulose, modifizierte Cellulose wie Carboxymethylcellulose, Alkylcellulosen, insbesondere Methylcellulose und andere Celluloseabkömmlinge. Gerade bei Verwendung dieser Stoffe als Binder tritt jedoch das Problem der mangelhaften Stabilität gegen Befeuchtung auf, da sich diese Stoffe in Wasser wieder lösen können. Als nichtaufweichende Binder haben sich dagegen in besonderem Masse Casein, Harnstoffharze und Melaminharze bewährt, die auch physiologisch unbedenklich sind. Weitere mögliche Binder sind natürliche oder synthetische Leime. Bei der Herstellung von kartonbeschichteten Gipsplatten aus dem Leichtgips ist eine wichtige Qualitätsgrösse die Haftung und Haltbarkeit des Kartons auf dem Gips. Die angegebenen Binder können auch die Haftung des Kartons auf der Leichtgipsoberfläche verbessern oder auch die üblicherweise als Klebstoff eingesetzte Stärke ganz ersetzen. Vorteilhaft wirkt sich dabei die Irreversibilität des Härtungsvorgangs des Binders aus, da hierdurch auch der Karton wasserresistent auf der Gipsoberfläche haftet.

Bezüglich der Feuerfestigkeit ist eine schlechte Brennbarkeit der Binder, insbesondere der Melamin- und Harnstoffharze von Vorteil. Zudem bewirken sie im Experiment eine zusätzliche Verhärtung der einer erhöhten Temperatur ausgesetzt gewesenen Oberfläche.

Der Binder kann als Trockensubstanz vor oder nach der Zugabe des Anmachwassers zugegeben werden, oder für eine schnellere Bereitstellung der Gipsmasse, z. B. in einem kontinuierlichen Verfahren, auch in gelöster Form zugegeben werden, damit der meist relativ langsame Auflösungs- oder Dispersionsvorgang nicht den Gesamtprozess verlangsamt. Im einfachsten Fall wird der Binder dem Anmachwasser Zugesetzt.

Der erfindungsgemässe Gips kann sowohl vor Ort aus den Bestandteilen zusammengemischt werden, aus allen oder einem Teil der Bestandteile vorgemischt vorliegen, wodurch die Eigenschaften nach dem Abbinden besser vorhersehbar sind, oder auch als fertige Platten, Bausteine oder sonstige Formteile eingesetzt werden. Zur Verbesserung der Einbindung des Füllstoffs, insbesondere der Adhäsion zwischen den Füllstoffteilchen und dem umgebenden Gipsmaterial, können dem Anmachwasser noch Hilfsstoffe, bevorzugt ein Netzmittel, zugesetzt werden. Das Netzmittel ergibt bei gleichem Wasseranteil ein geschmeidigeres Material, wodurch sich die Möglichkeit zur Wassereinsparung bei der Verarbeitung ergibt. Die Menge des Anmachwassers wird auch durch die bevorzugte Verwendung eines Füllstoffs mit hydrophobem Charakter verringert. Im Fall von Perlit kann dies durch vorherige Hydrophobierung erreicht werden. Glimmer ist im Normalfall bereits genügend hydrophob.

Der erfindungsgemässe Leichtgips setzt sich bevorzugt, jeweils auf das Gesamtvolumen im ausgehärteten Zustand bezogen, aus 20 - 80 % Gips und 80 - 20 % Füllstoffmischung zusammen. Als besonders günstig erweisen sich ca. 40 % Gips, ca. 60% Füllstoff sowie ein Zusatz von ca. 0,2 % Netzmittel. Gegebenfalls wird noch Binder in gelöster Form zugesetzt. Sein Anteil wird dabei auf den Gipsgewichtsanteil bezogen zu maximal 5%, bevorzugt zwischen 0,1 % und 2 % gewählt. Höhere Anteile als 5 % bieten erfahrungsgemäss keine wesentlichen Vorteile mehr. Die Füllstoffmischung kann sich beliebig aus den möglichen Füllstoffen zusammensetzen, im Extremfall kann auch nur ein Füllstoff vorhanden sein. Bevorzugte Komponenten sind hydrophobierter, expandierter Perlit und/oder exfolierter Glimmer, wie er z. B. als Vermiculit im Handel ist. Glimmer ist zwar gegenüber Perlit teurer, verbessert jedoch das akustische Verhalten von aus dem Leichtgips hergestellten Platten im Sinne einer Geräuschdämmung.

Der Leichtgips kann grundsätzlich wie der herkömmliche Gips verarbeitet und verwendet werden. Beispielhaft seien für den Trockenausbau die Herstellung von Platten für Richterwände, Gipsvollsteinen für Zwischenwände oder Deckenplatten. Der Leichtgips eignet sich aber auch für Stuckarbeiten. Dem Leichtgips können auch thixotrope und/oder hydrophobe Eigenschaften verliehen werden, und die Aushärtung kann verzögert werden. Derartige Modifikationen der Eigenschaften sind für den herkömmlichen Gips bekannt. Die Verarbeitung kann in jeder gewünschten Konsistenz erfolgen.

Der Leichtgips weist gegenüber massivem Gips mit einer Dichte von etwa 950 bis 1200 g/l eine je nach Füllmaterialanteil stark verringerte Dichte bis zu 300 g/l und kleiner auf. Wegen der hohen Porosität haben Platten aus dem Leichtgips auch eine erhöhte Isolationswirkung. Diese und die überwiegend zumindest schlechte Brennbarkeit der verwendeten Materialien ergeben eine hohe Feuerbeständigkeit. Das geringe Gewicht erlaubt es, anstatt Richterwänden vorteilhaft massive Wände aus dem Leichtgips zu verwenden. Massive Wände aus Leichtgips können auch tragende Funktionen übernehmen, und es können Innenaustattungselemente daran befestigt werden.

Bausteine oder Platten aus dem Leichtgips können für den Bau tragender und nichttragender Wände sowie für Verkleidungen von sichtbaren Flächen, insbesondere Wänden und Decken verwendet werden. In jedem Fall sind die bekannten Techniken der Schall- und Wärmeisolation zusätzlich anwendbar, wobei allerdings die Verwendung der Leichtgipsplatten bereits eine Isolationswirkung ergibt, so dass sich in bestimmten Fällen eine zusätzliche Isolation erübrigt.

Der Leichtgips kann durch eingelegtes Fasermaterial armiert werden, wie z. B. durch Polypropylenfasern oder andere Polymerfasern sowie mineralische Fasern. Da das Armierungsmaterial in dem abgebundenen Leichtgips eingeschlossen ist, wird die Freisetzung von Partikeln unterbunden.

Wände aus dem Leichtgips können auch als Teil einer Sandwichkonstruktion Anwendung finden. Z. B. kann eine wärmeisolierende Aussenwand aus einer Wand aus wetterbeständigem Material und einer Leichtgipswand nach innen zu bestehen. Hier ist von Vorteil, dass Wände aus dem Leichtgips Traglast übernehmen können.

## Patentansprüche

1. Baumaterial auf Gipsbasis, dadurch gekennzeichnet, dass es mindestens ein mineralisches, poröses Füllmaterial enthält.

2. Baumaterial gemäss Anspruch 1, dadurch gekennzeichnet, dass das Füllmaterial als Granulat zugesetzt ist.

3. Baumaterial gemäss Anspruch 1 oder 2, dadurch gekennzeichnet, dass das Füllmaterial Perlit, Glimmer oder eine Mischung aus beiden in beliebig gewähltem Verhältnis zueinander enthält.

4. Baumaterial gemäss Anspruch 3, dadurch gekennzeichnet, dass das Füllmaterial durch eine Vorbehandlung in einer expandierten oder Hohlräume aufweisenden Form vorliegt.

5. Baumaterial gemäss Anspruch 3 oder 4, dadurch gekennzeichnet, dass das Perlit hydrophobiert ist.

6. Baumaterial gemäss einem der Ansprüche 1 bis 5, dadurch gekennzeichnet, dass Granulat des Füllmaterials eine dem Einsatzzweck angepasste Grössenverteilung aufweist.

7. Baumaterial gemäss einem der Ansprüche 1 bis 6, dadurch gekennzeichnet, dass das Granulat des Füllmaterials aus Stücken oder Körnern aus dem Grössenbereich 0,5 mm bis 10 mm, bevorzugt 1 mm bis 3 mm, besteht.

8. Baumaterial gemäss einem der Ansprüche 1 bis 7, dadurch gekennzeichnet, dass es mindestens einen Hilfsstoff, insbesondere ein Netzmittel und/oder einen oder mehrere Binder enthält.

9. Baumaterial gemäss Anspruch 8, dadurch gekennzeichnet, dass mindestens einer der Hilfsstoffe ein während des Abbindevorgangs und/oder danach aushärtender Binder, insbesondere ein in Wasser dispergierbarer oder löslicher Klebstoff ist, bevorzugt ausgewählt aus den folgenden Stoffen: modifizierte Cellulose, insbesondere Methylcellulose; Melaminharz; Harnstoffharz; Casein; tierische, pflanzliche und synthetische Leime; Weissleim.

10. Baumaterial gemäss einem der Ansprüche 1 bis 9, dadurch gekennzeichnet, dass es, jeweils auf das Gesamtvolumen im ausgehärteten Zustand bezogen, 20 % bis 80 % Gips und 20 % bis 80 % Füllstoffmischung enthält.

11. Baumaterial gemäss einem der Ansprüche 9 bis 10, dadurch gekennzeichnet, dass es, bezogen auf das Gewicht des Gipsanteils im ausgehärteten Zustand, höchstens 0 % bis 5 %, bevorzugt 0,1 % bis 2 % an Binder enthält.

12. Baumaterial gemäss einem der Ansprüche 1 bis 11, dadurch gekennzeichnet, dass es zusätzliche Hilfsstoffe, insbesondere Farbstoffe, Härtungsverzögerer, Konsistenzmoderatoren und/oder armierendes Fasermaterial enthält.

13. Verfahren zur Herstellung des Baumaterials gemäss einem der Ansprüche 1 bis 12, dadurch gekennzeichnet, dass Binder in gelöster oder dispergierter Form zugegeben wird.

14. Verwendung des Baustoffes gemäss einem der Ansprüche 1 bis 13, dadurch gekennzeichnet, dass daraus Platten oder Bausteine für die Verkleidung von Wänden oder Decken oder für die Konstruktion von Mauern hergestellt werden.

15. Verwendung des Baustoffes gemäss Anspruch 14 für wärme- und/oder schallisolierende Wände oder Decken, dadurch gekennzeichnet, dass keine zusätzliche Isolationsschicht angebracht wird.

16. Verwendung des Baustoffes gemäss einem der Ansprüche 14 oder 15, dadurch gekennzeichnet, dass damit feuerbeständige Mauern oder Decken erstellt werden.

17. Verwendung des Baustoffes gemäss einem der Ansprüche 1 bis 12, dadurch gekennzeichnet, dass daraus mindestens eine Schicht einer Mauer in Sandwichbauweise erstellt wird.
